# FASCICULE DE BREVET EUROPEEN

(11) **EP 2 089 200 B1**
(45) Date de publication et mention de la délivrance du brevet: **05.04.2017**
(21) Numéro de dépôt: 07822857.4
(22) Date de dépôt: 26.11.2007
(51) Int. Cl.: B29B 15/10

(54) **PROCEDE DE FABRICATION D'UNE PLAQUE COMPOSITE A BASE DE PVC**
VERFAHREN ZUR HERSTELLUNG EINER VERBUNDPLATTE AUF PVC-BASIS
METHOD FOR PRODUCING A PVC-BASED COMPOSITE PLATE

(30) Priorité: 27.11.2006 FR 0610367
(43) Date de publication de la demande: 19.08.2009
(73) Titulaire: SOLVAY SA, 1120 Bruxelles (BE)
(72) Inventeur: DEHENNAU, Claude, 1410 Waterloo (BE); GRANDJEAN, Dominique, 1020 Brussels (BE)
(74) Mandataire: Vande Gucht, Anne
(86) Numéro de dépôt international: PCT/EP2007/062787
(87) Numéro de publication internationale: WO 2008/065061

(56) Documents cités:
- EP-A- 1 525 969
- WO-A-2006/033101
- WO-A-2006/045723
- Jim Kindinger: "Lightweight structural cores" In: D. B. Miracle & S. L. Donaldson: "Composites", December 2001 (2001-12), ASM Handbook, USA ISBN: 0871707039 pages 180-183,

## Description

La présente invention concerne un procédé de fabrication de plaques composites à base de PVC, ainsi que des structures incluant de telles plaques et en particulier, des structures ayant une âme alvéolaire et au moins une telle plaque comme renfort.

Dans de nombreuses industries (automobile, constructions civiles, navales...), on cherche à optimiser le rapport propriétés mécaniques/poids des structures utilisées. De nombreux procédés ont été mis au point pour réaliser cet objectif et l'un des plus courants consiste à utiliser une structure alvéolaire en nid d'abeilles éventuellement en sandwich entre deux plaques dites de finition. En combinant cette technique avec le choix d'un matériau léger (polymère plutôt que métal), on peut obtenir des structures particulièrement légères.

La demande WO 2006/045723 au nom de la demanderesse décrit une structure particulièrement intéressante ayant une âme cellulaire comprenant une structure en nid d'abeilles à base de PVC (polychlorure de vinyle) remplie de mousse de PUR (polyuréthane) et deux couches externes de PVC. Une telle structure et non seulement performante en ce qui le rapport propriétés mécaniques/poids des structures, mais elle peut également présenter une excellente résistance au feu moyennant un choix adéquat des compositions des résines (formulations PVC et PUR classées indépendamment M1 selon la norme NFP 92.507). Cette demande présente le recours à des plaques de PVC biorientées comme étant avantageux (notamment pour encore améliorer le rapport précité).

Un moyen alternatif d'augmenter les propriétés mécaniques à poids égal ou de réduire l'épaisseur (d'où le poids) à propriétés mécaniques similaires pourrait consister à utiliser des plaques composites c.à.d. incluant un renfort. De ce point de vue, des renforts fibreux dits «longs» (c.à.d. dont les fibres ont une longueur moyenne de l'ordre des cm) sont réputés pour conférer une amélioration du comportement en traction (module et résistance mesurés sur des plaques d'épaisseurs égales) plus marquée que des renforts fibreux dits «courts» (longueur de l'ordre des mm), ainsi qu'une augmentation de la résistance thermique, une meilleure stabilité dimensionnelle et une meilleure résistance aux chocs.

Toutefois, avec le PVC, qui est un polymère qui ne fond pas mais qui peut être gélifié (c.à.d. former une masse homogène où les grains de PVC ont perdu leur forme et leur identité) à condition d'être fortement malaxé en fondu, l'utilisation de tels renforts «longs» est difficile et la longueur de ces renforts est de toute manière nettement réduite à l'issue de cette opération. Cet inconvénient (réduction de la longueur de fibre) est d'ailleurs également rencontré les polymères cristallins, fusibles s'ils sont mis en oeuvre par malaxage (extrusion par exemple).

Des procédés alternatifs ont dès lors été proposés pour pouvoir incorporer des polymères dans des supports fibreux tissés ou non, et obtenir ainsi des composites polymère/renforts fibreux tissés ou non. Certains de ces procédés consistent en une enduction desdits supports/renforts à l'aide d'un latex ou d'une solution du polymère et puis, en une évaporation de l'eau ou du solvant. Une telle technique est coûteuse d'un point de vue énergétique et ne permet souvent pas une bonne dispersion du polymère à l'intérieur du substrat.

Le document EP1525969 décrit un procédé utilisant du PVC mais qui diffère de l'objet de la présente application en ce que la répartition de la poudre de PVC est effectuée avant la dépose sur le réseau de fibres.

Les demandes WO 99/22920 et WO 2005/038123 proposent un procédé amélioré consistant à disperser de la poudre (particules sèches) de polymère dans un réseau de fibres ou de filaments à l'aide d'un champ électrostatique alternatif et puis, à mouler l'ensemble par chauffage et pressage pour former des plaques. Ce procédé présente comme avantage d'obtenir à moindre coût, un composite plus compact où les fibres sont bien imprégnées de polymère. Toutefois, les poudres exemplifiées dans ces demandes sont soit des poudres de polymères cristallins, faciles à fondre dans la matrice, soit des poudres de résines thermodurcissables ne nécessitant pas de malaxage pour leur mise en oeuvre.

Or, la demanderesse a constaté que de manière surprenante, ce procédé donnait également de bons résultats avec du PVC alors qu'a priori, il n'était pas évident que du PVC réparti dans un réseau fibreux et simplement pressé à chaud puisse gélifier.

Dès lors, la présente invention concerne un procédé de fabrication de plaques composites à base de PVC selon la revendication 1.

Dans le cadre de l'invention, on entend désigner par «PVC», les homo- et copolymères dérivés du chlorure de vinyle (VC). Par copolymères dérivés du chlorure de vinyle, on entend désigner, dans la présente description, les copolymères contenant au moins 50 % et de préférence, au moins 70 % en poids d'unités monomériques dérivées du chlorure de vinyle. On préfère les copolymères contenant environ 75 à environ 95 % en poids de chlorure de vinyle. A titre d'exemples de comonomères copolymérisables avec le chlorure de vinyle, on peut citer les monomères insaturés oléfiniques, tels que l'éthylène, le propylène et le styrène et les esters tels que l'acétate de vinyle (VAC) et les acrylates et méthacrylates d'alkyles. La présente invention convient particulièrement bien aux homopolymères du VC et aux copolymères VC-VAC.

On utilise de préférence, dans le cadre de l'invention, des PVC fluides c.à.d. des PVC ayant un indice de viscosité en fondu ou nombre K (classiquement appelé K_{w} ou K-wert) faible c.à.d. inférieur ou égal à 68, de préférence à 60 et de manière tout particulièrement préférée, inférieur ou égal à 58. Pour des raisons pratiques (disponibilité commerciale), le PVC utilisé dans le cadre de l'invention a généralement un Kw supérieur ou égal à 50. A noter toutefois que des grades plus fluides pourraient sans doute convenir.

La granulométrie de la poudre de PVC utilisée est de préférence fine. Ainsi, le diamètre moyen des particules est de préférence inférieur ou égal à 300 µm, voire à 200 µm et de manière tout particulièrement préférée, à 150 µm.

Dans le cadre de l'invention, des mélanges commerciaux incluant une poudre de PVC ordinaire et des additifs habituels tels que stabilisants, pigments, lubrifiants, ... et encore appelés «compounds» ou «prémix» conviennent bien. Ces additifs peuvent être liquides ou solides. La présence d'un stabilisant thermique est particulièrement recommandée puisque le procédé selon l'invention implique une étape de chauffage sous pression. Ce stabilisant est de préférence présent à raison d'au moins 3 pcr (parts par 100 parts de résine), voire d'au moins 5 pcr et même, jusque 10 pcr. Il peut être de tout type (Pb, Ca-Zn, Sn...., ce dernier donnant de bons résultats, en particulier lorsque liquide). Il semblerait par contre que les formules habituelles, incluant des agents d'aide à la mise en oeuvre (ou «processing aids»), peuvent être simplifiées notamment en omettant lesdits agents.

Les fibres longues utilisées dans le procédé selon l'invention peuvent être des fibres quelconques disponibles commercialement. Il peut tant s'agir de fibres organiques (de produits naturels tel que le chanvre par exemple, ou de produits synthétiques tels que des fibres polymériques) que minérales (fibres de verre par exemple). Le procédé selon l'invention donne de bons résultats avec des fibres de verre. Dans le cadre de l'invention, on entend par «fibres longues», des fibres dont la longueur est de l'ordre des cm, de préférence supérieure ou égale à 10 cm, voire à plusieurs dizaines de cm (cette longueur pourrait même être de l'ordre des mètres).

Ces fibres peuvent ou non être tissées et le réseau selon l'invention peut ou non être ordonné. De bons résultats ont été obtenus avec des fibres simplement enchevêtrées et en particulier, avec des fibres de verre longues et enchevêtrées.

La manière de disperser la poudre sur et dans le réseau et puis, de mouler la plaque est décrite en détail dans les demandes internationales WO 99/22920 et WO 2005/038123 susmentionnées et dont le contenu est incorporé par référence dans la présente demande.

Les plaques composites à base de PVC obtenues par le procédé selon la présente demande peuvent être utilisées dans une structure composite ayant une âme alvéolaire et au moins une plaque à base de PVC renforcé de fibres longues obtenue par le procédé décrit précédemment. A noter qu'une telle structure pourrait également présenter un intérêt en dehors du cadre de la présente invention (c.à.d. que les plaques de PVC/fibres longues - de préférence de verre - pourraient avoir été obtenues par un autre procédé).

De préférence, la structure composite est une structure sandwich ayant une telle plaque en renfort de part et d'autre de l'âme alvéolaire. De préférence, les fibres longues sont des fibres de verre ce qui permet d'obtenir une structure ayant une bonne résistance au feu.

L'avantage de ces structures est de pouvoir utiliser des plaques de plus fine épaisseur pour une rigidité de structure donnée ou atteindre une plus grande rigidité de structure à épaisseur de plaques donnée. La résistance aux chocs induite par les plaques est également un atout.

De préférence, l'âme alvéolaire comprend une structure en nid d'abeilles. Par «nid d'abeilles», on entend désigner un objet généralement plan (sous la forme générale d'une plaque) ou légèrement courbe comprenant des alvéoles, c'est-à-dire des cellules ouvertes ou fermées ayant une section quelconque, généralement circulaire ou hexagonale, avec des parois essentiellement parallèles d'une cellule à l'autre et perpendiculaires aux surfaces de la plaque de renfort selon l'invention. De manière tout particulièrement préférée, cette structure en nid d'abeilles est également en PVC. Elle peut ou non comprendre de la mousse en sein comme décrit dans la demande WO 2006/045723 précitée et dont le contenu à cet effet est incorporé par référence dans la présente demande.

Par «mousse», on entend une matière dont la densité a été diminuée par l'ajout d'additifs connus sous le nom d'«agents moussants». De tels additifs sont bien connus dans le métier de la plasturgie. Ils peuvent être de divers types regroupés souvent en deux familles: agents moussants chimiques et agents moussants physiques. On peut aussi les mélanger. Des renseignements peuvent être trouvés à ce sujet dans de nombreux ouvrages techniques. Les réductions de densité varient fortement selon l'agent moussant et la quantité utilisée. Généralement, «par mousse», on entend désigner une matière dont la densité a été réduite à moins de 20 % de sa valeur initiale (sans agents moussants), voire à moins de 10 % de celle-ci et même, à moins de 5 % de celle-ci, pour des conditions de pression et température identiques. De préférence, la matière expansée est une matière plastique.

Dans une variante, les plaques composites à base de PVC obtenues par le procédé selon l'invention peuvent également être utilisées dans une structure ayant une âme cellulaire comprenant une structure en nid d'abeilles à base de PVC remplie de mousse de PUR et deux plaques externes en PVC renforcé de fibres de verre longues. De manière tout particulièrement préférée, les deux plaques externes sont solidaires d'un nid d'abeilles en PVC rempli de mousse de PUR et sont séparées par une couche de mousse PUR exempte de nid d'abeilles.

La structure en nid d'abeilles selon cette variante peut être obtenue de toute manière connue. De préférence, elle est obtenue par extrusion et de manière tout particulièrement préférée, elle est obtenue pas le procédé objet de la demande co-pendante PCT/EP2006/065385 au nom de la demanderesse et dont le contenu est également incorporé par référence dans la présente demande.

Dans ce procédé:
▪ on extrude en continu, dans une direction sensiblement horizontale, à travers une filière comprenant une face avant munie d'une pluralité de fentes parallèles et d'un matériau isolant au moins en surface, des lamelles parallèles d'une composition à base d'au moins une matière plastique;
▪ dès la sortie de la filière, on soumet, en alternances successives et entre deux calibreurs dont la longueur est suffisamment faible pour que la composition de matière plastique reste fondue, les espaces compris entre deux lamelles adjacentes à une injection de gaz comprimé et à une dépression, les deux côtés d'une même lamelle étant, pour l'un, soumis à l'action du gaz comprimé et, pour l'autre, à l'action de la dépression, et inversement lors de l'alternance suivante, afin de réaliser la déformation des lamelles et leur soudure deux à deux avec formation, dans un plan sensiblement parallèle à la direction d'extrusion, d'une structure alvéolaire dont les alvéoles constitutives s'étendent perpendiculairement à la direction d'extrusion.

Le nid d'abeilles et la ou les plaques en PVC renforcées peuvent être assemblées de toute manière connue: collage, soudure, ... Dans le cas où le nid d'abeilles comprend de la mousse, celle-ci peut être générée in situ et servir également à solidariser la/les plaque(s) et le nid d'abeilles (comme décrit dans la demande WO 2006/045723 précitée).

Enfin, les plaques obtenues par le procédé décrit ci avant et/ou les structures composites telles que décrites ci avant peuvent être utilisées dans le bâtiment/en construction et en particulier, dans les murs, les plafonds, les planchers et les coffrages pour béton, applications pour lesquelles la rigidité, la tenue au fluage et la résistance au choc sont importantes. Le fait de pouvoir diminuer les épaisseurs des parois pour une performance égale est également un atout. En particulier les structures composites sont intéressantes dans ces applications.

Le procédé selon l'invention est illustré de manière non limitative par l'exemple suivant:
On a préparé la formulation («prémix») suivante:

| Produits | pcr |
|---|---|
| PVC S250 | 100 |
| Baerostab MSL | 10 |
| Paraloid K120N | 1 |
| Paraloid K175 | 1,5 |
| Loxiol G60 | 1,5 |

La granulométrie de la formulation était de l'ordre de 300 µm.

Les ingrédients en sont:
- résine PVC S250 : nombre K (Kw) = 50
- Paraloid K175 : processing aid permettant de diminuer le collage et le plate-out
- Loxiol G60 : cire à base de stéarate.

Ils ont été mélangés dans un mélangeur Henschel selon le mode opératoire suivant:
- Mélanger les solides dans le 1^{er} mélangeur et laisser tourner à petite vitesse pendant 5'
- Faire ensuite monter la température jusqu'à 60°C en mélangeant à grande vitesse par palier de 2 à 3 °C et repasser sur la petite vitesse afin de ne pas surchauffer trop les pales
- A 60°C, tourner à petite vitesse et introduire les liquides
- Monter progressivement la température jusqu'à 90°C, repasser sur la petite vitesse et décharger dans le mélangeur froid.
- Laisser refroidir pendant 10 à 15'

On a fabriqué des plaques de PVC à l'aide de cette formulation dans les conditions suivantes (conformes à l'invention):
- Vitesse de déroulement : 2,5 m/min
- Largeur de laize : 1100 mm
- Renfort
   ∘ Référence du renfort : Fibre de verre Vetrotex P243 2400 tex
   ∘ Nombre de roving : 15
   ∘ Débit de roving : 1100 g/min
   ∘ position choppeur : 4,1
- Matrice
   ∘ Débit de poudre : 1650 g/min
   ∘ position saupoudreur : 22,6%
- Traitement électrostatique :
   ∘ Tension : 10 kV,
   ∘ Distance entre électrode : 4 mm
- Calandrage à plat (pressage)
   ∘ Température maximum : 200°C
   ∘ Température de refroidissement : 20°C
   ∘ Pression pneumatique appliquée sur la calandre : 5 bars
   ∘ Distance entre tapis : 0,3 mm

A des fins de comparaison, on a pressé des plaques dans des conditions similaires, à base d'une formulation identique à celle explicitée ci-dessus mais sans fibres de verre et sans traitement électrostatique («PVC référence»).

On a mesuré les propriétés mécaniques des plaques selon l'invention et des plaques de comparaison et les résultats obtenus sont repris dans les tableaux suivants:

### 1/ Evaluations réalisées sur le produit tel quel (épaisseur 0,7 mm).

| **Mesure** | **Norme** | **PVC** / **Fibres de verre** | **PVC référence** |
|---|---|---|---|
| Module en traction | ISO 527-4 | Sens L _{(*)} : 4341 | 2820 |
| (0.05% - 0.25%) | | Sens T _{(*)} : 3849 | |
| (MPa) | | 45° _{(*)} : 4509 | |
| Poids Tombant Instrumenté: Résilience (J/mm) | ISO 6603-2 (édition 2000-10-01) | 5,9 | 0,037 |
| Module en flexion (8-14 MPa) (MPa) | ISO 178 (2001) | 7038 | 3278 |
| Poids Tombant Instrumenté : Résilience (J/mm) | ISO 6603-2 (édition 2000-10-01) | 7,221 | 0,224 |

| | | | |
|---|---|---|---|
| (*) sens L = sens parallèle à la direction de fabrication sens T = sens perpendiculaire à la direction de fabrication 45° = suivant un angle de 45° par rapport aux deux directions L et T 2/ Evaluations réalisées sur plusieurs plaques pressées de manière à augmenter l'épaisseur et permettre ces évaluations (épaisseur 1,85 mm): | | | |

### Conclusions

Le produit renforcé fibres de verre présente un comportement mécanique nettement supérieur au produit non chargé.
Très bonne résistance au choc pour le produit chargé alors que le PVC de référence est très fragile.

## Revendications

1. Procédé de fabrication de plaques composites à base de PVC et d'un réseau de fibres longues, ledit procédé comprenant les étapes suivantes :
- on disperse du PVC sous forme de poudre sur ledit réseau ;
- on répartit la poudre dans le réseau à l'aide d'un champ électrostatique alternatif;
- on chauffe l'ensemble sous pression jusqu'à ce que la poudre forme une matrice continue.

2. Procédé selon la revendication précédente, dans lequel le PVC a un indice de viscosité en fondu ou nombre K (K_{w} ou K-wert) inférieur ou égal à 68.

3. Procédé selon l'une quelconque des revendications précédentes, dans lequel la poudre de PVC est à base de particules ayant un diamètre moyen inférieur ou égal à 300 µm.

4. Procédé selon l'une quelconque des revendications précédentes, dans lequel les fibres longues sont des fibres de verre.

5. Procédé selon l'une quelconque des revendications précédentes, dans lequel les fibres sont non tissées mais enchevêtrées.

## Patentansprüche

1. Verfahren zur Herstellung von Verbundplatten auf Basis von PVC und einem Langfasernetz, das folgende Schritte umfasst:
- PVC in Pulverform wird auf dem Netz verstreut;
- das Pulver wird mit Hilfe eines elektrostatischen Wechselfelds in dem Netz verteilt;
- das Ganze wird unter Druck erhitzt, bis das Pulver eine kontinuierliche Matrix bildet.

2. Verfahren nach dem vorhergehenden Anspruch, wobei das PVC einen Schmelzviskositätsindex oder eine K-Zahl (K_{w} oder K-Wert) kleiner oder gleich 68 aufweist.

3. Verfahren nach einem der vorhergehenden Ansprüche, wobei das PVC-Pulver auf Teilchen mit einem mittleren Durchmesser kleiner oder gleich 300 µm basiert.

4. Verfahren nach einem der vorhergehenden Ansprüche, wobei es sich bei den Langfasern um Glasfasern handelt.

5. Verfahren nach einem der vorhergehenden Ansprüche, wobei die Fasern nicht miteinander verwebt, sondern verwirbelt sind.

## Claims

1. Process for manufacturing composite sheets based on PVC and a network of long fibres, said process comprising the following steps:
- PVC in powder form is dispersed in said network;
- the powder is distributed in the network using an alternating electrostatic field; and
- the assembly is heated under pressure until the powder forms a continuous matrix.

2. Process according to the preceding claim, in which the PVC has a melt viscosity index or K value (K_{w} or K-wert) less than or equal to 68.

3. Process according to either one of the preceding claims, in which the PVC powder is based on particles having an average diameter less than or equal to 300 µm.

4. Process according to any one of the preceding claims, in which the long fibres are glass fibres.

5. Process according to any one of the preceding claims, in which the fibres are non-woven but entangled.
